# EUROPEAN PATENT APPLICATION

(11) **EP 4 738 202 A1**
(43) Date of publication of application: **06.05.2026**
(21) Application number: 24836322.8
(22) Date of filing: 03.07.2024
(51) Int. Cl.: G06N 3/065, G06N 3/045, G06F 7/544, G06F 13/16, G06N 3/063

(54) **ELECTRONIC DEVICE COMPRISING NEURAL PROCESSING UNIT, AND OPERATING METHOD THEREOF**

(30) Priority: 03.07.2023 KR 20230085788; 01.11.2023 KR 20230149252
(71) Applicant: Samsung Electronics Co., Ltd., Suwon-si, Gyeonggi-do 16677 (KR)
(72) Inventor: LEE, Junhyuk, Suwon-si Gyeonggi-do 16677 (KR); PARK, Hyunbin, Suwon-si Gyeonggi-do 16677 (KR); YANG, Seungjin, Suwon-si Gyeonggi-do 16677 (KR); CHOI, Jin, Suwon-si Gyeonggi-do 16677 (KR); NA, Boyeon, Suwon-si Gyeonggi-do 16677 (KR)
(74) Representative: HGF
(86) International application number: PCT/KR2024/009372
(87) International publication number: WO 2025/009874

(57) **Abstract**

An electronic device according to an embodiment may include a processing element (PE) array, a local memory which is configured with a plurality of local memory blocks and which stores data on a plurality of feature maps processed in the PE array, and a control core configured to control the PE array and the local memory. The control core may control the local memory such that at least one local memory block from among the plurality of local memory blocks is turned off based on a size of a feature map corresponding to a layer.

## Description

### [Technical Field]

The disclosure relates to an electronic device including a neural processing unit (NPU).

### [Background Art]

With the advancement of deep learning models, which are a type of artificial neural network, hardware specifications of neural processing units (NPUs), which are chipsets constituting neural networks, have been significantly enhanced. The enhancement of the specifications of the NPUs has led to an increase in a capacity of a static random access memory (SRAM) which serves a role similar to that of an internal cache.

When the deep learning model requires a large computational load, the NPU with the enhanced specifications is suitable. However, when the deep learning model requires only a small internal memory, not all SRAM cells are utilized, resulting in the occurrence of leakage current, which is current applied to unused cells.

If the specifications of the NPU in an electronic device exceed those required for the computational load of the deep learning model, unnecessary power consumption may occur from an overall perspective.

### [Disclosure of Invention]

### [Solution to Problem]

An electronic device according to an embodiment may include a neural processing unit (NPU). The NPU according to an embodiment may include a processing element (PE) array, a local memory which provides a feature map to the PE array and is configured with a plurality of local memory blocks, and a control core configured to control the PE array and the local memory. The control core according to an embodiment may control at least one local memory block such that some of the plurality of local memory blocks are turned off based on a size of a feature map.

A method of operating an electronic device according to an embodiment may include an NPU. In the operation method according to an embodiment, the NPU may include a PE array, a local memory which provides a feature map to the PE array and is configured with a plurality of local memory blocks, and a control core configured to control the PE array and the local memory. The method of operating the electronic device according to an embodiment may include allowing the control core to control at least one local memory block such that some of the plurality of local memory blocks are turned off based on a size of a feature map.

### [Brief Description of Drawings]

FIG. 1 is a block diagram of an electronic device in a network environment according to one or more embodiments;
FIG. 2 is a block diagram of a neural processing unit (NPU) in an electronic device according to one or more embodiments;
FIG. 3 illustrates a plurality of cells constituting a local memory according to an embodiment;
FIG. 4 illustrates a per-layer feature map size of a deep learning model having a relatively small computational load according to an embodiment;
FIG. 5 illustrates a per-layer feature map size of a deep learning model having a relatively large computational load according to an embodiment;
FIG. 6 is a control block diagram illustrating an operation of a per-layer local memory block in an electronic device according to an embodiment;
FIG. 7 is a flowchart illustrating a method of operating an electronic device according to an embodiment;
FIG. 8 is a flowchart illustrating a method by which an electronic device tags additional information for each layer during a compilation process according to an embodiment;
FIG. 9 illustrates a method of operating a local memory when layer groups having different buffer capacities are processed in an NPU according to an embodiment;
FIG. 10 illustrates a method of operating a local memory different from that of FIG. 9 when layer groups having different buffer capacities are processed in an NPU according to an embodiment;
FIG. 11 is a flowchart illustrating a method of operating an electronic device according to an embodiment;
FIG. 12 is a drawing for explaining the operating method according to FIG. 11, which is applicable to a mixed precision model; and
FIG. 13 is a drawing for explaining the operating method according to FIG. 11, which is applicable to a mixed precision model.

### [Mode for the Invention]

Embodiments of the disclosure will be described herein below with reference to the accompanying drawings. Advantages and features of the disclosure and methods of accomplishing the same may be understood more clearly by reference to the following detailed description of the embodiments and the accompanying drawings. However, the disclosure is not limited to embodiments disclosed below, and may be implemented in various forms. Rather, the embodiments are provided to complete the disclosure and to fully convey the concept of the disclosure to one of those ordinarily skilled in the art, and the disclosure will only be defined by the scope of claims. Throughout the specification, like reference numerals denote like components.

Unless otherwise defined, all terms used in this specification (including technical and scientific terms) may be used with the meanings commonly understood by those of ordinary skill in the art to which the disclosure pertains. In addition, terms defined in commonly used dictionaries shall not be ideally or excessively interpreted unless explicitly specifically defined. The term used in this specification is for the purpose of describing embodiments only and is not intended to limit the scope of the disclosure. As used in this specification, a singular form includes a plural form unless the context explicitly indicates otherwise.

The terms "comprises" and/or "comprising" used in this specification specify the presence of stated components, steps, operations, and/or elements, but do not preclude the presence or addition of one or more other components, steps, operations, and/or, elements, and/or groups thereof.

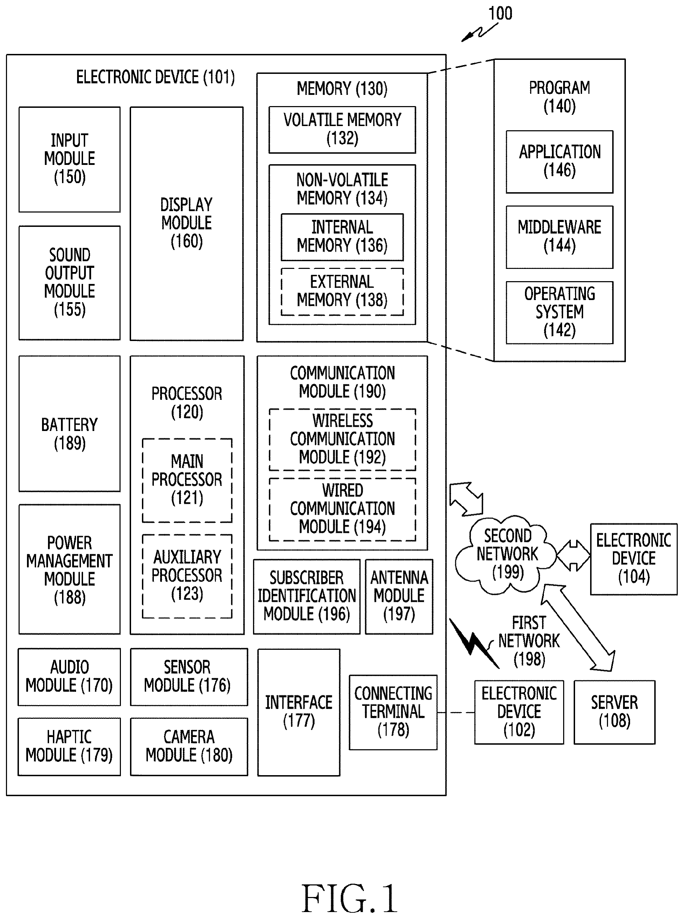

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

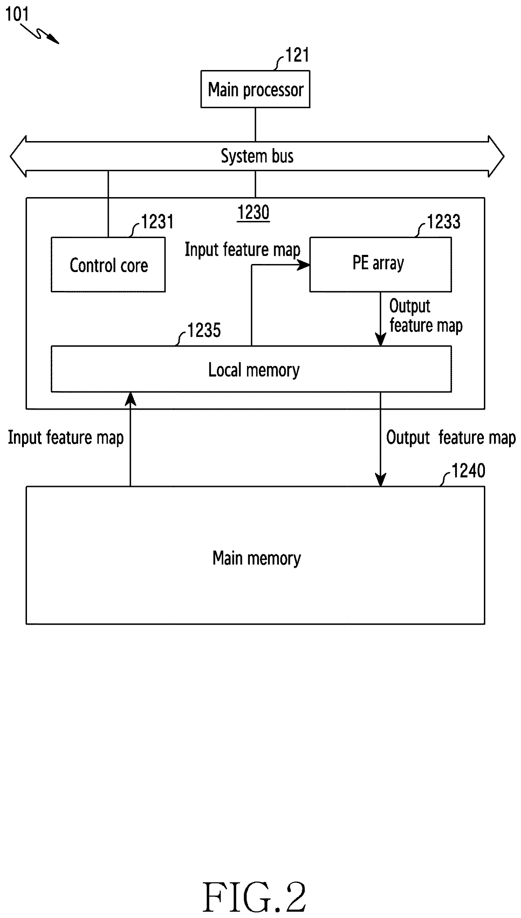

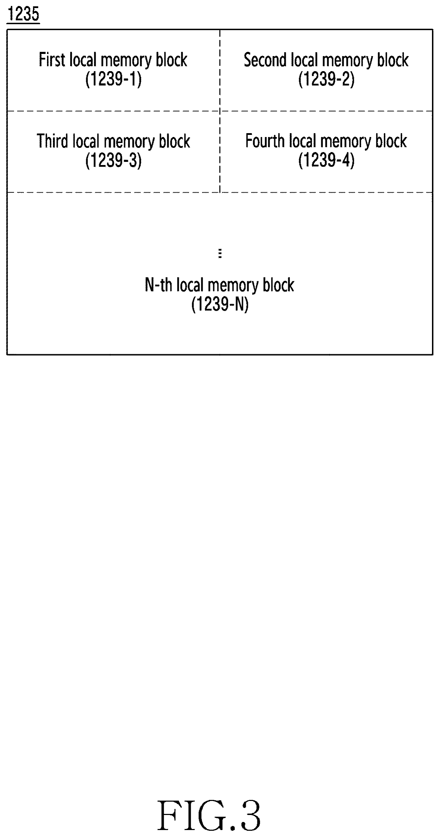

FIG. 2 is a block diagram of a neural processing unit (NPU) 1230 in an electronic device according to one or more embodiments, and FIG. 3 illustrates a plurality of cells constituting a local memory according to an embodiment.

The NPU 1230 according to an embodiment of the disclosure may be configured to include a control core 1231, a processing element (PE) array 1233, and a local memory 1235.

The NPU 1230 according to an embodiment may include the local memory 1235 configured to store an artificial neural network model which is inferred by the PE array 1233, or to store at least part of data of the artificial neural network model.

The NPU 1230 according to an embodiment may include the control core 1231 configured to control the PE array 1233 and the local memory 1235, based on structural data of the artificial neural network model or artificial neural network data locality.

The artificial neural network model may include structural data of the artificial neural network model or locality information of artificial neural network data. The locality information may relate to the number of PEs of the NPU 1230, capacities of memories storing feature maps and weights, and a memory hierarchical structure of the NPU 1230. The artificial neural network model may refer to an artificial intelligence (AI) recognition model or deep learning model trained to perform a specific inference function. The control core 1231 may exchange data with various components, such as a main processor 121 of an electronic device 101, via a system bus. For example, the main processor 121 may instruct the NPU 1230 to operate a specific artificial neural network model via the control core 1231.

The control core 1231 according to an embodiment may load data of the artificial neural network model, stored in a main memory 1240, into the local memory 1235.

The NPU 1230 according to an embodiment may provide inference results of the artificial neural network model to the main processor 121.

The control core 1231 according to an embodiment may control computation of the PE array 1233 for inference computation of the NPU 1230, as well as a sequence of read and write operations of the local memory 1235.

The control core 1231 according to an embodiment may analyze a structure of an artificial neural network model to be operated by the PE array 1233, or may receive analyzed structure information. Data of the artificial neural network which may be included in the artificial neural network model may include feature map data of each layer, node data, layout structure data of the layers, weight data of each of connections connecting nodes of the respective layers, or artificial neural network data locality information. The data of the artificial neural network may be stored in the local memory 1235 and/or the main memory 1240. The control core 1231 may access a memory in which the data of the artificial neural network is stored and utilize the necessary data. However, without being limited thereto, the control core 1231 may generate the structural data of the artificial neural network model or the artificial neural network data locality information, based on data such as node data and weight data of the artificial neural network model. The weight data may also be referred to as a weight kernel. The node data may also be referred to as a feature map. For example, data in which the structure of the artificial neural network model is defined may be generated when the artificial neural network model is designed or when training is complete. However, the disclosure is not limited thereto.

A control core 1231 according to an embodiment may schedule a computational sequence of the artificial neural network model, based on the structural data of the artificial neural network model or the artificial neural network data locality information.

The NPU 1230 according to an embodiment may sequentially process per-layer computation depending on the structure of the artificial neural network model. That is, when the structure of the artificial neural network model is determined, a computational sequence of per-kernel or per-layer feature map may be defined. Such information may be defined as the structural data of the artificial neural network model. The control core 1231 may acquire a value of a memory address, at which node data of layers and weight data of connections of the artificial neural network model are stored, based on the structural data of the artificial neural network model or the artificial neural network data locality information. For example, the control core 1231 may acquire the memory address values of the local memory 1235 storing feature maps and node data of layers and the weight data of the connections of the artificial neural network model. Accordingly, the control core 1231 may retrieve, from the main memory 1240, the node data of the layers and the weight data of connections of the artificial neural network model to be driven, and store these data in the local memory 1235. Node data of respective layers may have corresponding memory address values. Weight data of respective connections may have corresponding memory address values.

The control core 1231 according to an embodiment may schedule a computational sequence of the PE array 1233, based on the structural data of the artificial neural network model or the artificial neural network data locality information, for example, layout structural data of layers of the artificial neural network model or the artificial neural network data locality information.

The control core 1231 according to an embodiment performs scheduling based on the structural data of the artificial neural network model or the artificial neural network data locality information, and thus may operate thus operate conceptually differently from scheduling performed by the main processor 121. The scheduling of the main processor 121 operates to achieve optimal efficiency by considering fairness, efficiency, stability, and response times, or the like. That is, the scheduling is performed so as to maximize the number of processing operations executed within the same time by considering a priority, computation times, or the like.

The main processor 121 may use an algorithm which schedules tasks by considering data such as priorities of respective processing operations and computation processing times.

In contrast, the NPU 1230 may determine a processing sequence, based on the structural data of the artificial neural network model or the artificial neural network data locality information.

Furthermore, the control core 1231 may determine the processing sequence, based on the structural data of the artificial neural network model or the artificial neural network data locality information and/or structural data of the NPU 1230 to be used.

However, various embodiments of the disclosure are not limited to the structural data of the NPU 1230. For example, the structural data of the NPU 1230 may determine the processing sequence by utilizing at least one piece of data among a memory size of the local memory 1235, a hierarchical structure of the local memory 1235, data on the number of processing elements (PEs), and a computational unit structure of the PEs. That is, the structural data of the NPU 1230 may include at least one piece of data among the memory size of the local memory 1235, the hierarchical structure of the local memory 1235, the data on the number of the PEs, and the computational unit structure of the PEs. However, the disclosure is not limited to the structural data of the NPU 1230. The memory size of the local memory 1235 includes information on a memory capacity. The hierarchical structure of the local memory 1235 includes information on a specific inter-layer connection relationship for each hierarchical structure. The computational unit structure of the PEs includes information on components inside the PEs.

When a compiler (not shown) compiles the artificial neural network model so that the artificial neural network model is executed by the NPU 1230, the artificial neural network data locality of the artificial neural network model may be configured at a level between the PE array 1233 and the local memory 1235. The compiler may be implemented as separate software. However, the disclosure is not limited thereto.

That is, the compiler may appropriately configure the data locality of the artificial neural network model at the level between the PE array 1233 and the local memory 1235, according to algorithms applied to the artificial neural network model and hardware operation characteristics of the NPU 1230.

For example, even for the same artificial neural network model, the NPU 1230 may configure the data locality of the artificial neural network model differently depending on a scheme in which the NPU 1230 performs computation on the artificial neural network model.

For example, the artificial neural network data locality of the artificial neural network model may be configured based on algorithms such as feature map tiling, stationary techniques of the PE, memory reuse, or the like.

For example, the artificial neural network data locality of the artificial neural network model may be configured based on the number of PEs of the NPU 1230, the memory capacity of the local memory 1235 which stores feature maps and weights, and the hierarchical structure of the memory in the NPU 1230.

The compiler may determine a sequence of data required for computational processing by configuring the neural network data locality of the artificial neural network model at the level between the PE array 1233 and the local memory 1235 in units of words of the NPU 1230. The word unit may vary depending on quantization of a corresponding kernel, and may be, for example, 4 bits, 8 bits, 16 bits, or 32 bits. However, the disclosure is not limited thereto.

That is, the neural network data locality of the artificial neural network model at the level between the PE array 1233 and the local memory 1235 may be defined as computation sequence information of the artificial neural network model processed by the PE array 1233.

When the control core 1231 receives the neural network data locality information, the control core 1231 may know the computation sequence of the artificial neural network model on a word basis, and thus may pre-store necessary data from the main memory 1240 into the local memory 1235.

Accordingly, the control core 1231 may be configured to store the structural data and/or the neural network data locality information of the artificial neural network.

That is, the aforementioned structural data refers to structural data in the concept of layer or kernel units of the artificial neural network model. The aforementioned structural data may be utilized at an algorithm level.

That is, the aforementioned artificial neural network data locality refers to processing sequence information of the NPU 1230, determined when a corresponding artificial neural network model is converted by the compiler to operate in a specific NPU.

When the NPU 1230 processes a specific artificial neural network model, the artificial neural network data locality refers to sequence information, in units of words, of data required by the NPU 1230 to perform computation on the artificial neural network, which is performed according to a structure and computational algorithm of the artificial neural network model. The word unit may refer to an element unit, which is a basic unit processable by the NPU 1230. The artificial neural network data locality may be utilized at a hardware-memory level.

The control core 1231 according to an embodiment may predict in advance a memory read/write operation to be requested by the NPU 1230, based on the structural data or the artificial neural network data locality, and may store in advance data to be processed by the NPU 1230 from the main memory 1240 into the local memory 1235. Accordingly, there is an advantage in that data supply latency is minimized or substantially eliminated.

That is, the control core 1231 may determine a processing sequence even if only the artificial neural network's structural data of the artificial neural network model or the artificial neural network data locality information is utilized. That is, the control core 1231 may determine a computation sequence by utilizing the structural data or the artificial neural network data locality information from an input layer to an output layer of the artificial neural network. For example, an input layer computation may be scheduled with a first priority and an output layer operation may be scheduled last. Therefore, when the control core 1231 is provided with the structural data of the artificial neural network model or the artificial neural network data locality information, the entire computation sequence of the artificial neural network model may be known. Accordingly, there is an advantage in that it is possible to determine the entire scheduling sequence.

In addition, the control core 1231 may determine a processing sequence by considering the structural data of the artificial neural network model or the neural network data locality information and the structural data of the NPU 1230, and may also perform processing optimization for each of the determined sequences.

Therefore, when the control core 1231 is provided with both the structural data of the artificial neural network model or the artificial neural network data locality information and the structural data of the NPU 1230, computational efficiency of each scheduling sequence determined based on the structural data of the artificial neural network model or the artificial neural network data locality information may be further improved. For example, the control core 1231 may acquire connection data having four layers of artificial neural network layers and three layers of weight data which connect the respective layers. In this case, a method by which the control core 1231 schedules the processing sequence, based on the structural data of the artificial neural network model or the artificial neural network data locality information is described below as an example.

For example, the control core 1231 may set input data for inference as node data of a first layer, which is an input layer of the artificial neural network model, and may provide scheduling such that a multiply-and-accumulate (MAC) computation between the node data of the first layer and weight data of a first connection corresponding to the first layer is performed first. However, examples of the disclosure are not limited to the MAC computation, and it is also possible to perform artificial neural network computations by using multipliers and adders which may be variously modified and implemented. Hereinafter, for convenience of explanation, the computation may be referred to as a first computation, a result of the first computation may be referred to as a first computational value, and the scheduling may be referred to as first scheduling.

For example, the control core 1231 may set the first operation value as node data of a second layer corresponding to the first connection, and may provide scheduling such that an MAC computation between the node data of the second layer and weight data of a second connection corresponding to the second layer is performed after the first scheduling. Hereinafter, for convenience of explanation, the computation may be referred to as a second computation, a result of the second computation may be referred to as a second computational value, and the scheduling may be referred to as second scheduling.

For example, the control core 1231 may set the second computational value as node data of a third layer corresponding to the second connection, and may provide scheduling such that an MAC computation between the node data of the third layer and weight data of a third connection corresponding to the third layer is performed at the second scheduling. Hereinafter, for convenience of explanation, the computation may be referred to as a third computation, a result of the third computation may be referred to as a third computational value, and the scheduling may be referred to as third scheduling.

For example, the control core 1231 may set the third computational value as node data of a fourth layer, which is an output layer corresponding to the third connection, and may provide scheduling such that an inference result stored in the node data of the fourth layer is stored in the local memory 1235. Hereinafter, for convenience of explanation, the scheduling may be referred to as fourth scheduling. An inference result value may be utilized by being delivered to various components of electronic device 101.

For example, when the inference result value is a value resulting from detecting a specific keyword, the NPU 1230 may deliver the inference result to the main processor 121, so that electronic device 101 may perform an operation corresponding to the specific keyword.

The control core 1231 according to an embodiment may control the local memory 1235 and the PE array 1233 so that computations are performed in the order of the first scheduling, the second scheduling, the third scheduling, and the fourth scheduling. That is, the control core 1231 may be configured to control the local memory 1235 and the PE array 1233 so that computations are performed according to the set scheduling sequence.

The NPU 1230 according to an embodiment may be configured to schedule the processing sequence, based on structures of the layers of the artificial neural network and computational-sequence data corresponding to the structures. At least one or more processing sequences may be scheduled. For example, since the NPU 1230 may predict all computational sequences, it is possible to schedule a next computation or to schedule a specific-sequence computation.

For example, the control core 1231 may be configured to schedule the processing sequence, based on the structural data of the artificial neural network model from the input layer to the output layer, or based on the artificial neural network data locality information.

The control core 1231 according to an embodiment may utilize the scheduling sequence, based on the structural data of the artificial neural network model or the artificial neural network data locality information to control the local memory 1235, thereby improving a computation utilization rate of the NPU and enhancing a memory reuse rate.

Due to a characteristic of an artificial neural network computation executed in the NPU 1230 according to an embodiment, a computational value of one layer may serve as input data for a next layer.

The NPU 1230 may control the local memory 1235 according to a scheduling sequence, thereby improving the memory reuse rate of the local memory 1235. Memory reuse may be determined by the number of times of reading data stored in the memory. For example, after storing specific data in the memory, if the specific data is read only once and then deleted or overwritten, the memory reuse rate may be 100%. For example, after storing specific data in the memory, if the specific data is read four times and then deleted or overwritten, the memory reuse rate may be 400%. That is, the memory reuse rate may be defined by the number of times of reusing data stored once. That is, the memory reuse may refer to reusing of a specific memory address at which data in the memory, or specific data, is stored.

More specifically, when the control core 1231 is configured to receive the structural data of the artificial neural network model or the neural network data locality information, and is able to identify sequence data by which computation of the artificial neural network is performed based on the provided artificial neural network data locality information or structural data of the artificial neural network model, the control core 1231 may recognize that a computation result of node data of a specific layer of the artificial neural network model and weight data of a specific connection becomes node data of a next layer. That is, the NPU 1230 of the electronic device 101 may be configured to improve the memory reuse rate of the local memory 1235, based on the structural data of the artificial neural network model or the neural network data locality information.

Accordingly, the control core 1231 may reuse a value of a memory address, at which a specific computation result is stored, in a next computation. Therefore, the memory reuse rate may be improved.

For example, in case of a convolutional neural network, the NPU 1230 may store computed output feature map data in the local memory 1235, and may control the control core 1231 and/or the local memory 1235 so that the data is utilized as input feature map data for a next layer.

For example, the first computational value of the aforementioned first scheduling is set as the node data of the second layer in the second scheduling. Specifically, the control core 1231 may re-set a memory address value corresponding to the first computational value of the first scheduling, stored in the local memory 1235, to a memory address value corresponding to the node data of the second layer in the second scheduling. That is, the memory address value may be reused. Therefore, since the control core 1231 reuses data of the memory address of the first scheduling, the local memory 1235 may utilize the data as the node data of the second layer in the second scheduling without an additional memory write operation.

For example, the second computational value of the aforementioned second scheduling is set as the node data of the third layer in the third scheduling. Specifically, the control core 1231 may re-set a memory address value corresponding to the second computational value of the second scheduling, stored in the local memory 1235, to a memory address value corresponding to the node data of the third layer in the third scheduling. That is, the memory address value may be reused. Therefore, since the control core 1231 reuses data of the memory address of the second scheduling, the local memory 1235 may utilize the data as the node data of the third layer in the third scheduling without an additional memory write operation.

For example, the third computational value of the aforementioned third scheduling is set as the node data of the fourth layer in the fourth scheduling. Specifically, the control core 1231 may re-set a memory address value corresponding to the third computational value of the third scheduling, stored in the local memory 1235, to a memory address value corresponding to the node data of the fourth layer in the fourth scheduling. That is, the memory address value may be reused. Therefore, since the control core 1231 reuses data of the memory address of the third scheduling, the local memory 1235 may utilize the data as the node data of the fourth layer in the fourth scheduling without an additional memory write operation.

In addition, it is also possible for the control core 1231 to be configured to control the local memory 1235 by determining the scheduling sequence and whether the memory reuse is available. In this case, the control core 1231 may analyze the structural data of the artificial neural network model or the artificial neural network data locality information, thereby advantageously providing efficient scheduling. In addition, since data required for computation in which the memory reuse is possible does not need to be redundantly stored in the local memory 1235, memory consumption may be reduced. In addition, the control core 1231 may calculate the memory consumption reduced by the memory reuse to improve efficiency of the local memory 1235.

The control core 1231 may be configured to identify the scheduling sequence, based on the artificial neural network data locality information, and to pre-store necessary data in the local memory 1235. Therefore, when the PE array 1233 performs computation according to the scheduled sequence, data prepared in advance in the local memory 1235 may be utilized without requesting data from the main memory 1240.

In addition, the control core 1231 may also be configured to monitor resource consumption of the local memory 1235 and resource consumption of the PEs, based on the structural data of the NPU 1230. Accordingly, efficiency of hardware resource utilization in the NPU 1230 may be improved.

The control core 1231 of the NPU 1230 according to an embodiment may reuse the memory by utilizing the structural data of the artificial neural network model or the artificial neural network data locality information.

When the artificial neural network model is a deep neural network, the number of layers and the number of connections may significantly increase. In this case, the effect of memory reuse may be further maximized.

If the NPU 1230 does not identify the structural data of the artificial neural network model or the artificial neural network data locality information and the computational sequence, the control core 1231 is not able to determine whether the memory is reused for values stored in the local memory 1235. Therefore, the control core 1231 unnecessarily generates a memory address required for each processing operation, and needs to copy substantially identical data from one memory address to another memory address. Accordingly, unnecessary memory read/write operations occur, and duplicate values are stored in the local memory 1235, leading to unnecessary memory waste.

The PE array 1233 is configured by arranging a plurality of PEs configured to compute node data of the artificial neural network and weight data of the connection. Each PE may be configured to include an MAC unit and/or an arithmetic logic unit (ALU) unit. However, examples according to the present are not limited thereto.

The PE array 1233 may be configured with a plurality of PEs, or may be configured in replacement of an MAC within a single PE such that computational units implemented with a plurality of multipliers and adder trees are disposed in parallel. In this case, the PE array 1233 may also be referred to as at least one PE including the plurality of computational units.

The PE array 1233 is configured to include a plurality of PEs. The number of the plurality of PEs is not limited. The size or number of the PE array 1233 may be determined based on the number of the plurality of PEs. The size of the PE array 1233 may be implemented in an N × M matrix form. Herein, N and M are integers greater than 0. The PE array 1233 may include N × M PEs. That is, one or more PEs may be present.

The size of the PE array 1233 may be designed in consideration of characteristics of the artificial neural network model on which the NPU 1230 operates. The number of PEs may be determined in consideration of a data size of the artificial neural network model to be operated, a required operation speed, and required power consumption. The data size of the artificial neural network model may be determined based on the number of layers of the artificial neural network model and a weight data size of each layer.

Therefore, the size of the PE array 1233 of the NPU 1230 according to an embodiment is not limited. As the number of PEs of the PE array 1233 increases, parallel processing capability of the artificial neural network model in operation may increase, whereas a manufacturing cost and physical size of the NPU 1230 may also increase.

For example, the artificial neural network model operated by the NPU 1230 may be an AI keyword recognition model, i.e., an artificial neural network trained to detect 30 specific keywords. In this case, the size of the PE array 1233 of the NPU 1230 may be designed as 4 × 3 in consideration of characteristics of computational loads. In other words, the NPU 1230 may be configured to include 12 PEs. However, without being limited thereto, the number of the plurality of PEs may be selected, for example, within a range of 8 to 16,384. That is, examples of the disclosure are not limited by the number of PEs.

The PE array 1233 is configured to perform functions such as addition, multiplication, accumulation, or the like required for computations of the artificial neural network. In other words, the PE array 1233 may be configured to perform an MAC computation.

The local memory 1235 may be a tightly-coupled memory (TCM), and may be a dedicated memory area provided inside the NPU 1230. The TCM may be implemented as a static random-access memory (SRAM).

The main memory 1240 may be a dedicated memory area provided outside the NPU 1230. The main memory 1240 may be implemented as a dynamic random access memory (DRAM).

The NPU 1230 according to an embodiment reads an input feature map, which serves as layer-level input data, from the main memory 1240 and temporarily stores the input feature map in the local memory 1235 while processing the artificial neural network model. The PE array 1233 delivers to the local memory 1235 an output feature map generated as a result of performing computational processing on the input feature map. The control core 1231 controls the local memory 1235 so that the output feature map temporarily stored in the local memory 1235 is stored in the main memory 1240.

Meanwhile, referring to FIG. 3, the local memory 1235 may be configured with a plurality of local memory blocks 1239-1 to 1239-N. The local memory 1235 may be implemented as an SRAM. The SRAM may be configured as an array of numerous local memory cells. The plurality of local memory cells may be connected through wordlines and bitlines. Some of the plurality of local memory cells may be partitioned in units of the local memory blocks, and the local memory 1235 may be configured with the plurality of local memory blocks 1239-1 to 1239-N. That is, the local memory cell refers to a minimum unit constituting the local memory 1235, and the local memory block refers to a minimum unit configured with a plurality of local memory cells for partially and dynamically operating the local memory 1235. For example, when the local memory 1235 has a total capacity of 8MB and is partitioned into four local memory blocks, each local memory block may have a computational load corresponding to 2 MB. In addition, when the local memory 1235 has a total capacity of 8 MB and is partitioned into eight local memory blocks, each local memory block may have a computational load corresponding to 1 MB. As in the aforementioned example, the local memory blocks may be partitioned to have equal capacities, or may be partitioned to have different capacities. For example, when the local memory 1235 has the total capacity of 8 MB and is partitioned into three local memory blocks, the local memory 1235 may include one local memory block having a computational load corresponding to 4 MB and two local memory blocks each having a computational load corresponding to 2 MB. The aforementioned example is for convenience of explanation, and it will be obvious that the number of local memory blocks and the capacity of each local memory block may be combined according to various designs.

Since the local memory 1235 according to an embodiment is partitioned into the plurality of local memory blocks 1239-1 to 1239-N, only some of the plurality of local memory blocks 1239-1 to 1239-N may operate when the NPU 1230 processes the artificial neural network model.

Each of the plurality of local memory blocks 1239-1 to 1239-N may be provided with a power line (not shown) which supplies power (current) to the memory, and a switch (not shown) capable of cutting off the supplied current. Accordingly, the local memory 1235 may allow at least one of the plurality of local memory blocks 1239-1 to 1239-N to be switched to an off state in response to a control signal from the control core 1231. For example, the control core 1231 may control the local memory 1235 such that the first local memory block 1239-1 and the second local memory block 1239-2 are in an on state, while the third local memory block 1239-3 through the N-th local memory block 1239-N are in the off state.

That is, the NPU 1230 according to an embodiment includes the local memory 1235, and the local memory 1235 may be partitioned into N areas so as to be partially turned on or off. Such a partial on/off operation is similar to techniques applied in cache memories. However, in various embodiments of the disclosure, at least one local memory block is turned on/off based on a feature map size of the artificial neural network model, thereby reducing unnecessary power consumption.

Meanwhile, in the NPU 1230 according to an embodiment, the feature map size may correspond to a buffer capacity of the local memory 1235 required for processing computations on the input feature map and the output feature map, as well as a layer itself. The NPU 1230 according to an embodiment may control the local memory 1235 such that at least one of the plurality of local memory blocks 1239-1 to 1239-N is turned off (or on) based on the feature map size required to process the input feature map, the output feature map, and the layer.

As described above, in order to control the local memory 1235, the NPU 1230 may control the local memory 1235 not only by considering the input feature map, the output feature map, and the layer itself, but also based on any one of the input feature map and the output feature map.

The NPU 1230 according to an embodiment may control the local memory 1235, based on a buffer capacity size required for processing the input feature map. For example, the NPU 1230 may determine the number of local memory blocks to be turned off based on a weight (e.g., a factor of 2) applied to a buffer capacity size required for processing the input feature map.

In addition, the NPU 1230 according to an embodiment may control the local memory 1235, based on a buffer capacity size required for processing the output feature map. For example, the NPU 1230 may determine the number of local memory blocks to be turned off based on a weight (e.g., a factor of 2) applied to the buffer capacity size required for processing the output feature map.

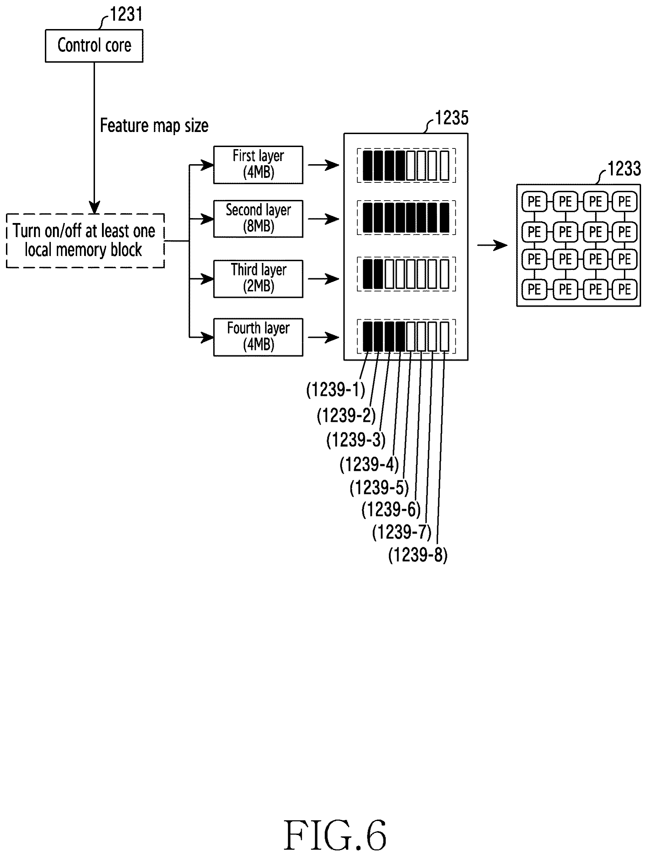

When processing the artificial neural network model, the NPU 1230 reads data related to the feature maps to be processed from the main memory 1240 and performs computational processing via the PE array 1233. In this case, the NPU 1230 may turn off at least one local memory block of the local memory 1235 when processing a relatively small feature map, and may turn on all of the local memory blocks of the local memory 1235 when processing a relatively large feature map. Detailed embodiments are described with reference to FIG. 6 to FIG. 8.

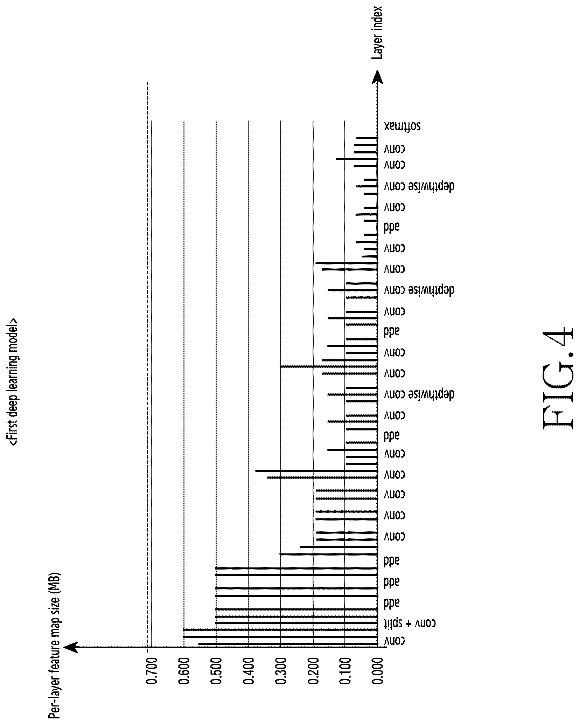

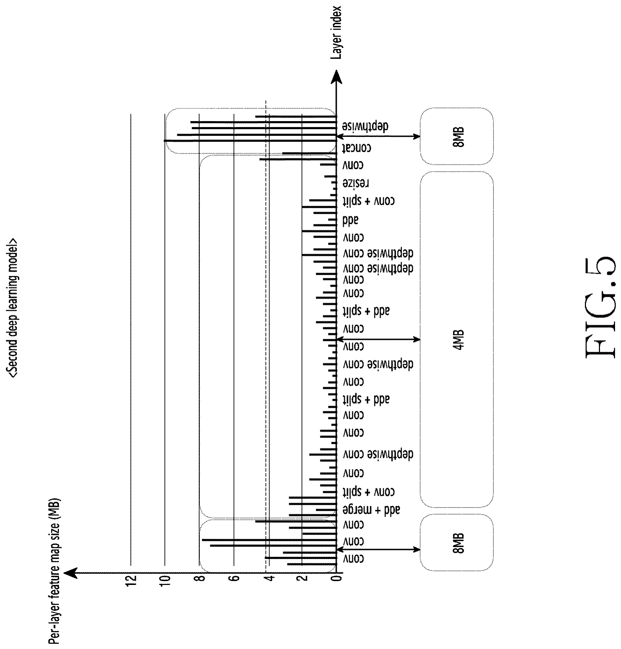

Meanwhile, the local memory 1235 may be turned on/off in different manners depending on a per-layer feature map size of the artificial neural network model. This is described with reference to FIG. 4 and FIG. 5.

FIG. 4 illustrates a per-layer feature map size of a deep learning model having a relatively small computational load according to an embodiment, and FIG. 5 illustrates a per-layer feature map size of a deep learning model having a relatively large computational load according to an embodiment.

The per-layer feature map size illustrated in FIG. 4 is implemented with a feature map of 1 MB or less, as a first deep learning model having a relatively small computational load compared to FIG. 5. For example, the first deep learning model may be MobilenetEdgeTPU.

When the first deep learning model operates in the NPU 1230 having a memory size of 8 MB (i.e., the capacity of the local memory 1235, see FIG. 2 and FIG. 3), the first deep learning model may use only local memory blocks of 1 MB or less. Therefore, when the local memory 1235 of the NPU 1230 has a total capacity of 8 MB and is partitioned into eight local memory blocks of 1 MB, computational processing is possible with only one local memory block activated. In this case, seven local memory blocks of the local memory 1235 remain in an off state.

The per-layer feature map size illustrated in FIG. 5 is implemented with a feature map having various sizes, as a second deep learning model having a relatively large computational load compared to FIG. 4. For example, the second deep learning model may be Deeplabv3+.

FIG. 5 illustrates a per-layer feature map size required according to a processing sequence of a second deep learning model. Information on the feature map size may be acquired during a compilation process of the deep learning model with respect to the NPU 1230. In the second deep learning model, early layers may have a size of approximately 8 MB or less, middle layers may have a size of approximately 4 MB or less, and late layers may have a size of approximately 8 MB or more.

During the processing of the second deep learning model, the NPU 1230 may turn on some areas of the local memory 1230 required at a time of processing a layer, and may turn off the remaining areas of the local memory 1235 not required. For example, when the local memory 1235 of the NPU 1230 has a total capacity of 8 MB and is partitioned into eight local memory blocks of 1 MB, all of the local memory blocks may operate in the on state in a duration in which early layers are subjected to computational processing, four local memory blocks operate in the off state in a duration in which middle layers are subjected to computational processing, and all of the local memory blocks operate in the on state again in a duration in which late layers are subjected to computational processing.

The NPU 1230 according to an embodiment may dynamically operate by turning off at least one local memory block of the local memory 1235, based on a data size required for a layer to generate a resulting feature map, and then turning on again the local memory block later according to a required data size. A per-layer buffer capacity may be determined based on a data size required to generate a feature map. That is, the NPU 1230 according to an embodiment may determine the number of local memory blocks to be turned off in the local memory 1235, based on the per-layer buffer capacity. A size of a feature map corresponding to a layer is related to the data size required to generate a resulting value, i.e., the feature map. The information on the feature map may be known at a time of compilation. Size information of the feature map may be added to the deep learning model compiled through tagging for corresponding information for each layer, allowing the buffer capacity required in a model operation to be known in advance.

FIG. 6 is a control block diagram illustrating an operation of a per-layer local memory block in an electronic device according to an embodiment. For convenience of explanation, it is described in FIG. 6 that the local memory 1235 has a total capacity of 8 MB and is configured with eight local memory blocks of 1 MB. However, the capacity, number, and partitioning scheme of the local memory blocks may vary depending on various designs.

The control core 1231 according to an embodiment may turn on or off at least one local memory block, based on a feature map size acquired in a compilation process. The control core 1231 according to an embodiment may sequentially process a computation for each layer in accordance with a structure of an artificial neural network model. For example, the control core 1231 sequentially processes the computation in the order of a first layer, a second layer, a third layer, and a fourth layer. The first layer requires a buffer capacity of 4 MB. The second layer requires a buffer capacity of 8 MB. The third layer requires a buffer capacity of 2 MB. The fourth layer requires a buffer capacity of 4 MB. Herein, the buffer capacity refers to a capacity of the local memory 1235, which is required to process a corresponding layer. The number of local memory blocks to be turned on or off may be determined based on the buffer capacity.

For example, when the feature map of the first layer is subjected to computational processing by the PE array 1233, the control core 1231 may turn off four local memory blocks. Next, when the feature map of the second layer is subjected to computational processing by the PE array 1233, the control core 1231 may turn on all of the local memory blocks. Next, when the feature map of the third layer is subjected to computational processing by the PE array 1233, the control core 1231 may turn off six local memory blocks. Next, when the feature map of the fourth layer is subjected to computational processing by the PE array 1233, the control core 1231 may turn off four local memory blocks.

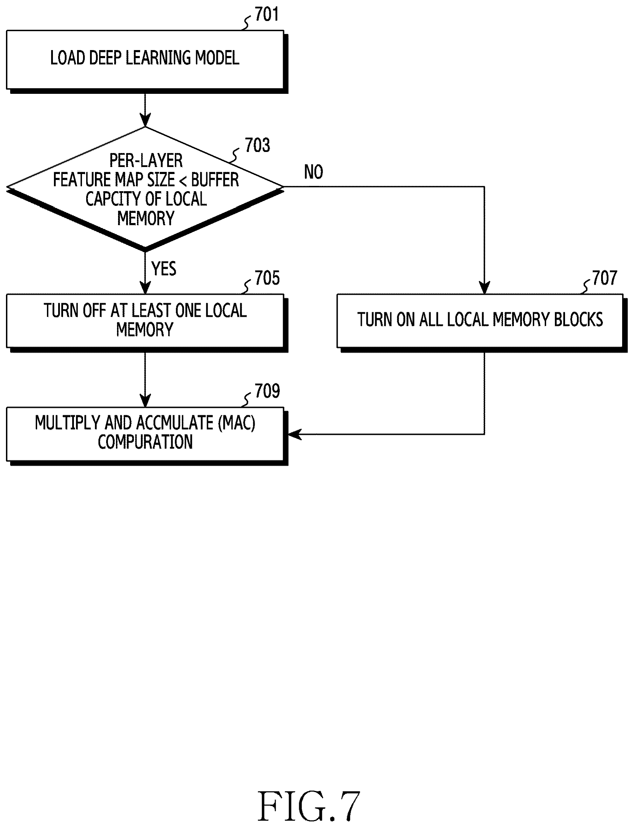

FIG. 7 is a flowchart illustrating a method of operating an electronic device according to an embodiment.

The control core 1231 according to an embodiment loads a deep learning model (an artificial neural network model (step 701). The control doer 1231 according to an embodiment may load data of the artificial neural network model, stored in the main memory 1240, into the local memory 1235. The data of the artificial neural network may be stored in the local memory 1235 and/or the main memory 1240. The control core 1231 may utilize necessary data by accessing a memory in which the data of the artificial neural network is stored. Accordingly, the control core 1231 may retrieve, from the main memory 1240, feature maps and node data of layers of the artificial neural network model to be activated as well as weight data of connections, and may store these data in the local memory 1235.

Meanwhile, a processor according to an embodiment may adjust a bandwidth of the main memory 1240, based on the number of local memory blocks to be turned on (or off). That is, the processor may adjust an amount of data to be loaded into the local memory 1235, by adjusting the bandwidth of the main memory 1240. The processor according to an embodiment may adjust the bandwidth of the main memory 1240, based on the number of local memory blocks in an on (or off) state while the local memory 1235 is controlled to turn on or off.

The control core 1231 according to an embodiment may determine the number of local memory blocks 1239 included in the local memory 1235, based on the local memory 1235 and a per-layer feature map size.

When the per-layer feature map size is smaller than a capacity of the local memory 1235 (step 703), the core control 1231 according to an embodiment may turn off at least one local memory block 1239 (step 705). The control core 1231 may determine the number of local memory blocks 1239 to be turned off based on information on a buffer capacity required by each layer, which is acquired during a compilation process. When the per-layer feature map size is smaller than the buffer capacity, the NPU 1230 according to an embodiment may turn off the unnecessary local memory block 1239, thereby reducing overall power consumption.

When the per-layer feature map size is greater than or equal to the capacity of the local memory 1235, the control core 1231 according to an embodiment may turn on all of the local memory blocks 1239-1 to 1239-N (see FIG. 3) (step 707). In this case, since a feature map size of a corresponding layer is greater than the buffer capacity, normal computational processing is enabled by turning on all of the local memory blocks 1239.

The control core 1231 according to an embodiment processes an MAC computation (step 709). The control core 1231 may turn off at least one of the local memory blocks 1239 or turn on all of the local memory block 1239 according to the step 705 and/or the step 707.

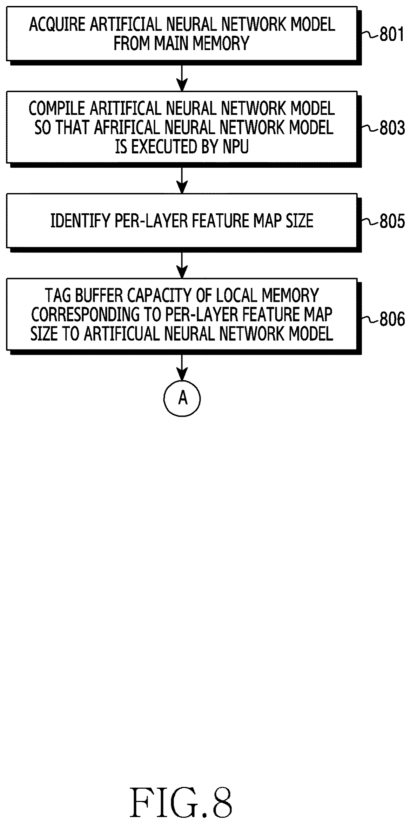

The NPU 1230 according to an embodiment may use information acquired during the compilation process to determine the number of local memory blocks 1239 to be turned off (or on). Hereinafter, a process of determining the number of local memory blocks 1239 is described in detail with reference to FIG. 8.

FIG. 8 is a flowchart illustrating a method by which an electronic device tags additional information for each layer during a compilation process according to an embodiment.

The artificial neural network model operating in the NPU 1230 is subjected to the compilation process to match hardware characteristics of the NPU 1230. That is, when data on a feature map is loaded from the main memory 1240 to the NPU 1230, the compilation process converts the artificial neural network model so as to be compatible in the NPU 1230. In this case, the NPU 1230 may know a buffer capacity of the local memory 1235 required to process the feature map through a process of parsing the artificial neural network model.

The NPU 1230 according to an embodiment acquires the artificial neural network model from the main memory 1240 (step 801).

The NPU 1230 according to an embodiment compiles the artificial neural network model in accordance with hardware characteristics so that the artificial neural network model is executed by the NPU 1230 of the electronic device 101 (see FIG. 1) (step 803). When a compiler (not shown) included in the NPU 1230 compiles the artificial neural network model so that the artificial neural network model is executed by the NPU 1230, artificial neural network data locality of the artificial neural network model may be configured at a level between the PE array 1233 and the local memory 1235. The NPU 1230 according to an embodiment may acquire a size of a per-layer feature map along with configuring of locality in a compilation process. The compiler may be implemented as separate software.

As described above, the compilation may be performed either autonomously within the NPU 1230 or be performed outside the NPU 1230. For example, the compilation may be performed by a software development kit (SDK) provided in the main processor 121 (see FIG. 1) which serves as an application processor. The application processor stores size information on the per-layer feature map acquired in the compilation process in the main memory 1240 of FIG. 2, thereby allowing the NPU 1230 to load the size information. In addition, the application processor may provide the NPU 1230 with information on layers and information on the per-layer feature map size on a real time basis, and may perform runtime-type compilation to determine whether the NPU 1230 is able to process the feature map. The NPU 1230 according to an embodiment identifies the size of the per-layer feature map (step 805). The NPU 1230 may know in advance the size of the per-layer feature map required when the artificial neural network model operates in the NPU 1230, thereby acquiring the buffer capacity of the local memory 1235 needed to process the feature map.

The NPU 1230 according to an embodiment tags the buffer capacity of the local memory 1235 corresponding to the per-layer feature map size to the artificial neural network model (step 806). In this case, the artificial neural network model to be tagged corresponds to data for which compilation is complete.

As described above, when information on the per-layer feature map size acquired through the compilation process is tagged to the compiled model, the artificial neural network model for which compilation is complete has size information of the per-layer feature map sequentially processed and thus may determine the buffer capacity of the local memory 1235 to be used. Based on the buffer capacity, it is possible to turn on/off a local memory block area to be used and a local memory block area not to be used.

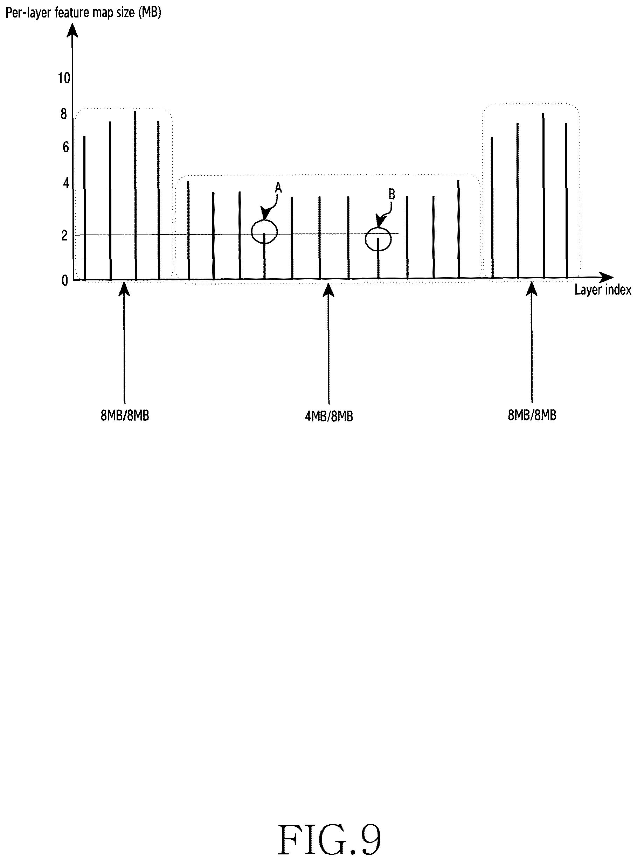

Meanwhile, according to an embodiment of the disclosure, the NPU 1230 may reduce power consumed in the NPU 1230 in such a manner that at least one local memory block 1239 is turned on/off depending on a processing sequence of layers. The on/off control of the local memory block 1239 may be implemented by controlling a switch (e.g., a transistor) capable of cutting off current supplied to the local memory 1239. If there is a continuous difference in feature map sizes between adjacent layers when the plurality of layers are processed sequentially, an on/off operation of the local memory block 1239 may occur at short cycles. Power consumption occurs due to switching even during the on/off process. When the local memory block 1239 is turned on/off for every layer, power consumption may occur equivalent to a case where all of the local memory blocks 1239 are turned on. For this case, a method of operating the local memory 1235 is described with reference to FIG. 9 to FIG. 11.

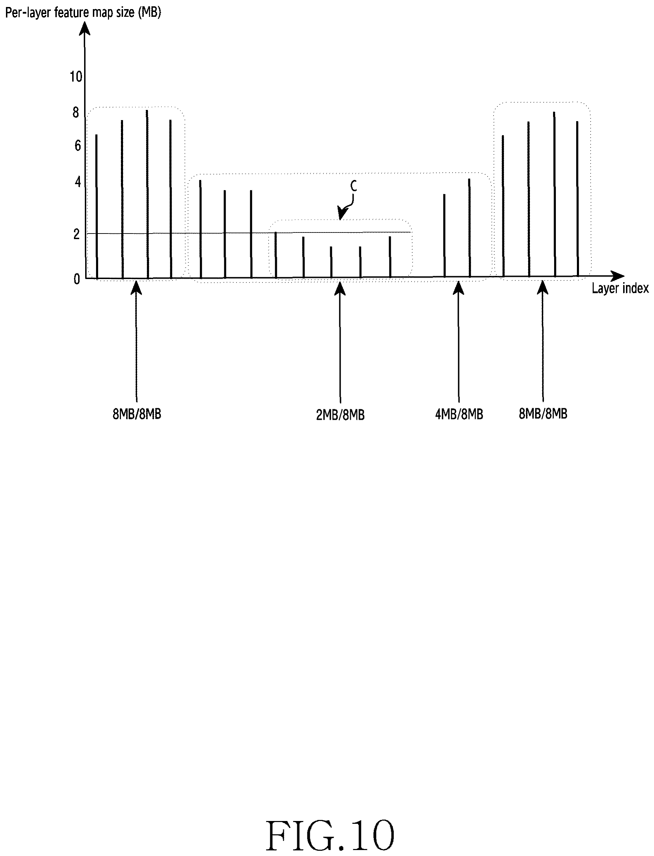

FIG. 9 illustrates a method of operating a local memory when layer groups having different buffer capacities are processed in an NPU according to an embodiment. FIG. 10 illustrates a method of operating a local memory different from that of FIG. 9 when layer groups having different buffer capacities are processed in an NPU according to an embodiment.

FIG. 9 and FIG. 10 commonly illustrate per-layer feature map sizes according to a computational processing sequence of an early layer group, a middle layer group, and a late layer group, in that order.

Since an average size of layers belonging to the early layer group is close to 8 MB, the NPU 1230 controls the local memory block 1239 so that the buffer capacity of the local memory 1235 becomes 8 MB. For example, when a total capacity of the local memory 1235 is 8 MB, the NPU 1230 turns on all of the local memory blocks 1239.

Since an average size of layers belonging to the middle layer group is close to 4 MB, the NPU 1230 controls the local memory block 1239 so that the buffer capacity of the local memory 1235 becomes 4 MB. For example, when the total capacity of the local memory 1235 is 8 MB and a unit capacity of each local memory block 1239 is 1 MB, the NPU 1230 turns off four of the local memory blocks 1239.

Since an average size of layers belonging to the late layer group is close to 8 MB, similar to the early layer group, the NPU 1230 controls the local memory block 1239 so that the buffer capacity of the local memory 1235 becomes 8 MB. For example, when the total capacity of the local memory 1235 is 8 MB, the NPU 1230 turns on all of the local memory blocks 1239.

In general, computational processing of the NPU 1230 requires greater buffer capacities in early and late stages than computational processing in a middle stage. However, this may vary depending on the artificial neural network model.

The difference between FIG. 9 and FIG. 10 lies in whether layers having feature map sizes smaller than the average size of the middle layer group are adjacent to each other. As shown in FIG. 9, when two layers (A and B) having sizes smaller than the average size of the middle layer group (i.e., 4 MB) are not adjacent to each other, an on-off-on operation of the local memory block 1239 occurs before and after the layer A, and another on-off-on operation occurs before and after the layer B. The NPU 1230 according to an embodiment may skip the turning off the local memory block 1239 during computational processing of the layers A and B, thereby preventing power consumption caused by switching control.

FIG. 10 illustrates a case where a plurality of layers C smaller than an average size (e.g., 4 MB) of a middle layer group are adjacent to each other. In this case, the NPU 1230 may maintain an off state for the local memory block 1239 in computational processing for consecutive layers, thereby reducing power consumption of the local memory block 1239 of the remaining 2 MB.

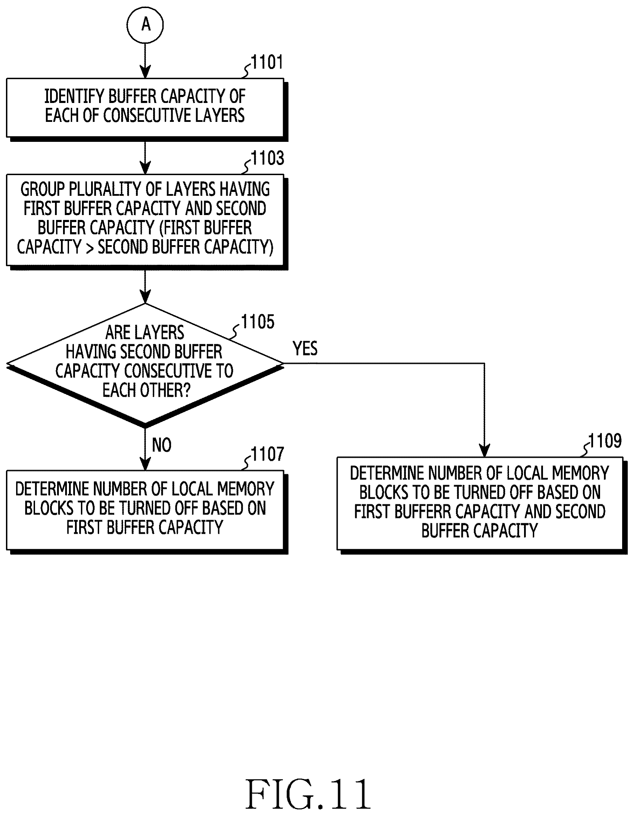

FIG. 11 is a flowchart illustrating a method of operating an electronic device according to an embodiment.

The NPU 1230 according to an embodiment identifies a buffer capacity of each of a plurality of consecutive layers (step 1101). Herein, the buffer capacity refers to a capacity of the local memory 1235 required to process each of the consecutive layers, and the number of local memory blocks to be turned on or off may be determined according to the buffer capacity.

The NPU 1230 according to an embodiment groups a plurality of layers having a first buffer capacity and a second buffer capacity (step 1103). in this case, it is assumed that the first buffer capacity is greater than the second buffer capacity. Referring to FIG. 9 and FIG. 10, for example, the grouped plurality of layers may correspond to a middle layer group. The first buffer capacity may be 4 MB and the second buffer capacity may be 2 MB. In the local memory 1235, the number of local memory blocks 1239 to be turned off is determined according to adjacency of layers requiring relatively smaller buffer capacity within the grouped plurality of layers.

The NPU 1230 according to an embodiment identifies whether layers having the second buffer capacity are consecutive (step 1105).

When the layers having the second buffer capacity are not consecutive, the NPU 1230 according to an embodiment determines the number of local memory blocks 1239 to be turned off based on the first buffer capacity (step 1107). Referring to FIG. 9, the middle layer group includes layers having the first buffer capacity and two layers A and B having the second buffer capacity. In this case, when the two layers A and B are not consecutive, an on-off-on operation of the local memory blocks 1239 occurs before and after the layer A, and a similar on-off-on operation occurs before and after the layer B, resulting in power consumption for switching the local memory blocks 1239. The NPU 1230 according to an embodiment determines the number of local memory blocks 1239 to be turned off by considering the buffer capacity of each layer. However, when layers with relatively small buffer capacities are not consecutive, the local memory blocks 1239 may be turned off based on the first buffer capacity, which occupies larger distribution. Therefore, in this embodiment, during computational processing for the layers A and B, four rather than six out of eight local memory blocks 1239 are turned off.

When layers having the second buffer capacity are consecutive, the NPU 1230 according to an embodiment determines the number of local memory blocks 1239 to be turned off based on both the first buffer capacity and the second buffer capacity (step 1109). With reference to FIG. 10, the middle layer group includes layers having the first buffer capacity and layers having the second buffer capacity. In this case, the layers having the second buffer capacity are adjacent to each other, and thus are subjected to sequential computation processing. The NPU 1230 needs to reduce power consumption by continuously operating only the local memory blocks 1239 due to the layers C having the second buffer capacity within the middle layer group. Therefore, in this embodiment, the number of local memory blocks 1230 to be turned off is determined by considering both the first buffer capacity and the second buffer capacity, unlike in the embodiment of FIG. 9. That is, during the computation processing of layers in a section C, six out of eight local memory blocks 1239 are turned off.

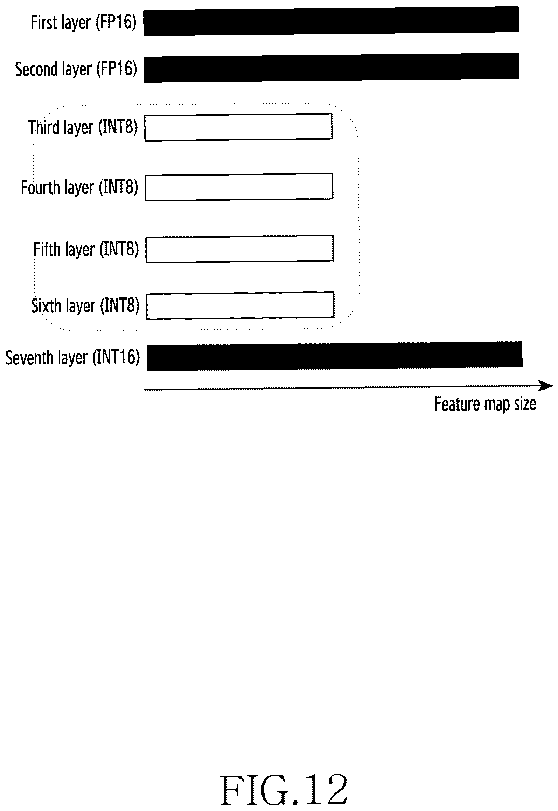

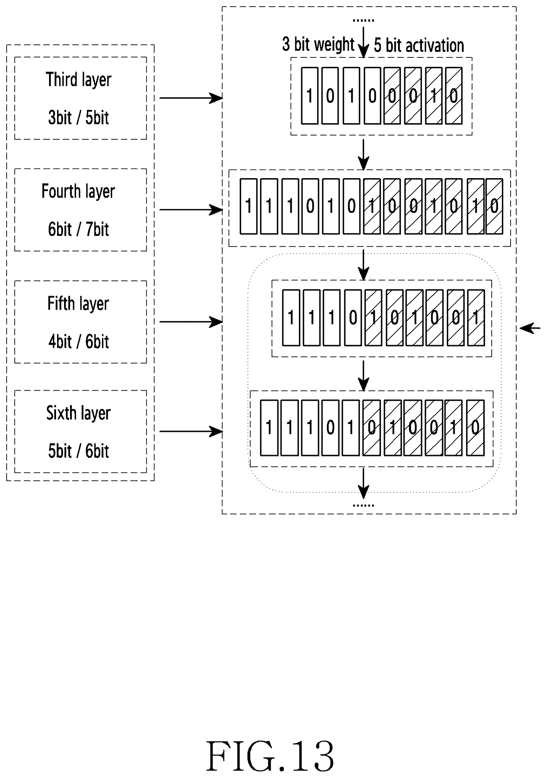

FIG. 12 and FIG. 13 are drawings for explaining the operating method according to FIG. 11, which is applicable to a mixed precision model.

With the development of quantization technologies for an artificial neural network model, a bit-width may be differentially set according to importance of each layer of an artificial neural network, based on a per-layer feature map size.

Model compression may be achieved for the artificial neural network model through quantization after training. After the artificial neural network model is trained, a size of a feature map may be quantized based on the importance of each layer.

For example, referring to FIG. 12, quantization may convert a tensor weight and an activation function from a float type to an int type, thereby reducing a model size and increasing a test speed. Specifically, a pre-trained FP32 model may be quantized to FP16 (16-bit floating points) or INT8. FIG. 12 is an example of a model quantized for each layer by using only two bit-widths, i.e., FP16 and INT8. In this case, after the quantization process, the size of the feature map used in layers quantized to INT8 becomes smaller compared to FP16, whereas the size of the feature map used in layers quantized to FP16 becomes larger compared to INT8. That is, when the artificial neural network model is quantized, an opportunity for turning off the local memory blocks 1239 increases compared to a non-quantized model.

FIG. 13 illustrates an example of a model in which bits allocated to weight and activation layers are quantized differently for each layer. That is, it is an example of a model in which the bits allocated to the weight and activation layers are quantized differently for each layer. In a method according to FIG. 13, layers (e.g., the third layer [3bit/5bit] and the fifth layer [4bit/6bit]) with smaller bit-widths are highly likely to have smaller sizes of feature maps.

As described above, even when a deep learning model which has undergone quantization operates on the NPU 1230, power consumption may be reduced during the quantized operation by turning off at least one local memory block 1239 when a layer with a reduced feature map size operates by utilizing per-layer feature map size information.

The disclosure is to provide an electronic device capable of reducing power consumption caused by an SRAM in an NPU, and an operating method thereof. However, it should be noted that embodiments described below are not limited to the aforementioned purpose and may also operate in configurations for other purposes.

According to an embodiment of the disclosure, an electronic device may include to a processing element (PE) array, a local memory which is configured with a plurality of local memory blocks and which stores data on a plurality of feature maps processed in the PE array, and a control core configured to control the PE array and the local memory. The control core according to an embodiment may control the local memory such that at least one local memory block from among the plurality of local memory blocks is turned off based on a size of a feature map corresponding to a layer.

The electronic device according to an embodiment may further include a main memory which stores an artificial neural network model in a first language format so as to provide the artificial neural network model, and a processor which provides the local memory with the artificial neural network model stored in the main memory in the first language format. When the artificial neural network model in the first language format is compiled to a second language format, the processor according to an embedment may tag a buffer capacity of a local memory corresponding to a size of the feature map to the compiled artificial neural network model.

While the local memory is controlled, the processor according to an embodiment may adjust a bandwidth of the main memory, based on the number of local memory blocks in an on state. The local memory may acquire data from the main memory, based on the adjusted bandwidth.

The control core according to an embodiment may determine the number of local memory blocks to be turned off based on a buffer capacity corresponding to a size of the per-layer feature map.

The control core according to an embodiment may turn on all of the plurality of local memory blocks, when a size of the per-layer feature map is greater than a total buffer capacity of the plurality of local memory blocks.

The local memory according to an embodiment may be a tightly-coupled memory (TCM) which provides the control core with the per-layer feature map in association with the control core.

The processor according to an embodiment may be configured to tag a first buffer capacity corresponding to a feature map size of a first layer to an artificial neural network model in the second language format, tag a second buffer capacity corresponding to a feature map size of a second layer, which is processed next to the first layer, to the artificial neural network model in the second language format, and tag a third buffer capacity corresponding to a feature map size of a third layer, which is processed next to the second layer, to the artificial neural network model in the second language format.

The control core according to an embodiment may be configured to classify a plurality of consecutive layers into a plurality of layer groups differentiated depending buffer capacities, and determine the number of local memory blocks to be turned off based on a buffer capacity corresponding to the layer group.

The control core according to an embodiment may be configured to group a plurality of layers having a first buffer capacity and a second buffer capacity smaller than the first buffer capacity, and determine the number of local memory blocks to be turned off based on the first buffer capacity, when layers having the second buffer capacity are not consecutive within the layer group.

The control core according to an embodiment may be configured to group a plurality of layers having a first buffer capacity and a second buffer capacity smaller than the first buffer capacity, and determine the number of local memory blocks to be turned off among the plurality of cells, based on the first buffer capacity and the second buffer capacity, when layers having the second buffer capacity are consecutive within the layer group.

The control core according to an embodiment may be configured to control the PE array to perform a multiply-and-accumulate (MAC) computation in a state where some of the plurality of memory blocks are turned off.

According to an embodiment of the disclosure, a method of operating an electronic device including a neural processing unit (NPU) is provided. The NPU may include a PE array, a local memory which is configured with a plurality of local memory blocks and which stores data on a plurality of feature maps processed in the PE array, and a control core configured to control the PE array and the local memory. The operating method according to an embodiment may include controlling the local memory such that at least one local memory block from among the plurality of local memory blocks is turned off based on a size of a feature map corresponding to a layer.

In the operating method according to an embodiment, the electronic device may further include a main memory which stores an artificial neural network model in a first language format so as to provide the NPU with the artificial neural network model. The operating method according to an embodiment may further include compiling the artificial neural network model in the first language format to a second language format. The operating method according to an embodiment may further include tagging a buffer capacity of a local memory corresponding to a size of the feature map to the compiled artificial neural network model.

The operating method according to an embodiment may further include determining the number of local memory blocks to be turned off based on a buffer capacity corresponding to a size of the per-layer feature map.

The operating method according to an embodiment may further include turning on all of the plurality of local memory blocks, when a size of the per-layer feature map is greater than a total buffer capacity of the plurality of local memory blocks.

In the operating method according to an embodiment, the local memory may be a TCM which provides the control core with the per-layer feature map in association with the control core.

In the operating method according to an embodiment, the compiling may include tagging a first buffer capacity corresponding to a feature map size of a first layer to an artificial neural network model in the second language format, tagging a second buffer capacity corresponding to a feature map size of a second layer, which is processed next to the first layer, to the artificial neural network model in the second language format, and tagging a third buffer capacity corresponding to a feature map size of a third layer, which is processed next to the second layer, to the artificial neural network model in the second language format.

The operating method according to an embodiment may further include classifying a plurality of consecutive layers into a plurality of layer groups differentiated depending buffer capacities, and determining the number of local memory blocks to be turned off based on a buffer capacity corresponding to the layer group.

The operating method according to an embodiment may further include grouping a plurality of layers having a first buffer capacity and a second buffer capacity smaller than the first buffer capacity. The operating method according to an embodiment may further include determining the number of local memory blocks to be turned off based on the first buffer capacity, when layers having the second buffer capacity are not consecutive within the layer group.

The operating method according to an embodiment may further include grouping a plurality of layers having a first buffer capacity and a second buffer capacity smaller than the first buffer capacity. The operating method according to an embodiment may further include determining the number of local memory blocks to be turned off among a plurality of cells, based on the first buffer capacity and the second buffer capacity, when layers having the second buffer capacity are consecutive within the layer group.

The operating method according to an embodiment may further include controlling the PE array to perform an MAC computation in a state where some of the plurality of memory blocks are turned off.

According to an embodiment of the disclosure, an NPU may include a PE array, a local memory which is configured with a plurality of local memory blocks and which stores data on a per-layer feature map processed in the PE array, and a control core configured to control the PE array and the local memory. The control core according to an embodiment may control the local memory such that at least one local memory block from among the plurality of local memory blocks is turned off based on a size of a feature map corresponding to a layer.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a processing element (PE) array;
a local memory which is configured with a plurality of local memory blocks and which stores data on a plurality of feature maps processed in the PE array; and
a control core configured to control the PE array and the local memory,
wherein the control core controls the local memory such that at least one local memory block from among the plurality of local memory blocks is turned off based on a size of a feature map corresponding to a layer.

2. The electronic device of claim 1, further comprising:
a main memory which stores an artificial neural network model in a first language format so as to provide the artificial neural network model; and
a processor which provides the local memory with the artificial neural network model stored in the main memory in the first language format,
wherein, when the artificial neural network model in the first language format is compiled to a second language format, the processor tags a buffer capacity of a local memory corresponding to a size of the feature map to the compiled artificial neural network model.

3. The electronic device of claim 2, wherein, while the local memory is controlled, the processor adjusts a bandwidth of the main memory, based on the number of local memory blocks in an on state, and the local memory acquires data from the main memory, based on the adjusted bandwidth.

4. The electronic device of claim 2, wherein the control core determines the number of local memory blocks to be turned off based on a buffer capacity corresponding to a size of the per-layer feature map.

5. The electronic device of claim 2, wherein the control core turns on all of the plurality of local memory blocks, when a size of the per-layer feature map is greater than a total buffer capacity of the plurality of local memory blocks.

6. The electronic device of claim 1, wherein the local memory is a tightly-coupled memory (TCM) which provides the control core with the per-layer feature map in association with the control core.

7. The electronic device of claim 2, wherein the processor is configured to:
tag a first buffer capacity corresponding to a feature map size of a first layer to an artificial neural network model in the second language format;
tag a second buffer capacity corresponding to a feature map size of a second layer, which is processed next to the first layer, to the artificial neural network model in the second language format; and
tag a third buffer capacity corresponding to a feature map size of a third layer, which is processed next to the second layer, to the artificial neural network model in the second language format.

8. The electronic device of claim 2, wherein the control core is configured to:
classify a plurality of consecutive layers into a plurality of layer groups differentiated depending buffer capacities; and
determine the number of local memory blocks to be turned off based on a buffer capacity corresponding to the layer group.

9. The electronic device of claim 8, wherein the control core is configured to:
group a plurality of layers having a first buffer capacity and a second buffer capacity smaller than the first buffer capacity; and
determine the number of local memory blocks to be turned off based on the first buffer capacity, when layers having the second buffer capacity are not consecutive within the layer group.

10. The electronic device of claim 8, wherein the control core is configured to:
group a plurality of layers having a first buffer capacity and a second buffer capacity smaller than the first buffer capacity; and
determine the number of local memory blocks to be turned off among the plurality of cells, based on the first buffer capacity and the second buffer capacity, when layers having the second buffer capacity are consecutive within the layer group.

11. The electronic device of claim 1, wherein the control core is configured to control the PE array to perform a multiply-and-accumulate (MAC) computation in a state where some of the plurality of memory blocks are turned off.

12. A method of operating an electronic device including a neural processing unit (NPU), the NPU comprising:
a processing element (PE) array;
a local memory which is configured with a plurality of local memory blocks and which stores data on a plurality of feature maps processed in the PE array; and
a control core configured to control the PE array and the local memory, and
the method comprising controlling the local memory such that at least one local memory block from among the plurality of local memory blocks is turned off based on a size of a feature map corresponding to a layer.

13. The method of claim 12, the electronic device further comprising:
a main memory which stores an artificial neural network model in a first language format so as to provide the NPU with the artificial neural network model; and
a processor which provides the NPU with the artificial neural network model stored in the main memory in the first language format, and
the method further comprising:
compiling the artificial neural network model in the first language format to a second language format; and
tagging a buffer capacity of a local memory corresponding to a size of the feature map to the compiled artificial neural network model.

14. The method of claim 13, wherein the compiling comprises:
tagging a first buffer capacity corresponding to a feature map size of a first layer to an artificial neural network model in the second language format;
tagging a second buffer capacity corresponding to a feature map size of a second layer, which is processed next to the first layer, to the artificial neural network model in the second language format; and
tagging a third buffer capacity corresponding to a feature map size of a third layer, which is processed next to the second layer, to the artificial neural network model in the second language format.

15. The method of claim 13, further comprising:
classifying a plurality of consecutive layers into a plurality of layer groups differentiated depending buffer capacities; and
determining the number of local memory blocks to be turned off based on a buffer capacity corresponding to the layer group.
